Europäisches Patentamt

European Patent Office

Office européen des brevets

(19)

(11) **EP 1 105 869 B1**

(12) **EUROPEAN PATENT SPECIFICATION**

(45) Date of publication and mention
of the grant of the patent:
**02.04.2003 Bulletin 2003/14**

(21) Application number: **00945732.6**

(22) Date of filing: **08.06.2000**

(51) Int Cl.⁷: **G10L 19/02**

(86) International application number:
**PCT/EP00/05344**

(87) International publication number:
**WO 00/079519 (28.12.2000 Gazette 2000/52)**

(54) **AUDIO TRANSMISSION SYSTEM HAVING AN IMPROVED ENCODER**

AUDIO-ÜBERTRAGUNGSSYSTEM MIT VERBESSERTER KODIEREINRICHTUNG

SYSTEME DE TRANSMISSION AUDIO AVEC CODEUR AMELIORE

(84) Designated Contracting States:
**DE FR GB**

(30) Priority: **18.06.1999 EP 99201959**

(43) Date of publication of application:
**13.06.2001 Bulletin 2001/24**

(73) Proprietor: **Koninklijke Philips Electronics N.V.
5621 BA Eindhoven (NL)**

(72) Inventors:
• **TAORI, Rakesh
  NL-5656 AA Eindhoven (NL)**
• **SLUIJTER, Robert, J.
  NL-5656 AA Eindhoven (NL)**
• **DEN BRINKER, Albertus, C.
  NL-5656 AA Eindhoven (NL)**

(74) Representative:
**Groenendaal, Antonius Wilhelmus Maria et al
INTERNATIONAAL OCTROOIBUREAU B.V.,
Prof. Holstlaan 6
5656 AA Eindhoven (NL)**

(56) References cited:
**EP-A- 0 337 636         WO-A-89/09985
US-A- 4 885 790         US-A- 5 504 833**

• **TAORI R ET AL: "Closed-loop tracking of
sinusoids for speech and audio coding" IEEE
WORKSHOP ON SPEECH CODING
PROCEEDINGS. MODEL, CODERS, AND ERROR
CRITERIA, PORVOO, FINLAND, 20 - 23 June
1999, pages 1-3, XP002149588 IEEE, Piscataway,
NJ, USA ISBN: 0-7803-5651-9**
• **PURNHAGEN H: "Advances in parametric audio
coding" PROCEEDINGS OF THE 1999 IEEE
WORKSHOP ON APPLICATIONS OF SIGNAL
PROCESSING TO AUDIO AND ACOUSTICS
(WASPAA'99), NEW PALTZ, NY, USA , 17 - 20
October 1999, pages 31-34, XP002149587 IEEE,
Piscataway, NJ, USA ISBN: 0-7803-5612-8**

**Description**

The present invention relates to an audio encoder, said audio encoder comprising segmenting means for dividing an input audio signal into subsequent signal segments, signal component identification means for identifying signal components in the subsequent signal segments, and track determining means for determining linked signal components present in the subsequent signal segments.

The invention further relates to a transmitter, a coding method, a tangible medium carrying a computer program and a signal carrying a computer program.

A transmission system according to the preamble is known from US 4,885,790.

Such transmission systems and audio encoders are used in applications in which audio signals have to be transmitted over a transmission medium with a limited transmission capacity or have to be stored on storage media with a limited storage capacity. Examples of such applications are the transmission of audio signals over the Internet, the transmission of audio signals from a mobile phone to a base station and vice versa and storage of audio signals on a CD-ROM, in a solid state memory or on a hard disk drive.

Different operating principles of audio encoders have been tried to achieve a good audio quality at a modest bit rate. In one of these operating methods, an audio signal to be transmitted is divided into a plurality of segments, having fixed or segment dependent length of 5 - 50 ms. In each of said segments the audio signal is represented by a plurality of signal components, which can be sinusoids that are defined by their amplitudes, their frequencies and possibly their phases.

The transmitting means transmits a representation of the amplitudes and frequencies of the signal components to the receiver. The operations performed by the transmitter can include, channel coding, interleaving and modulation.

The receiving means receive a signal representing the audio signal from a transmission channel and performs operations like demodulation, de-interleaving and channel decoding. The decoder obtains the representation of the audio signal from the receiver and derives a reconstructed audio signal from it by generating a plurality of sinusoids as described by the encoded signal and combining them into an output signal.

In an audio signal often there is a relation between the signal components of the present signal segment and the previous segment. The audio signal can e.g. include a frequency sweep of a sinusoidal component having a duration of a plurality of signal segments. The presence of such kind of signals can be exploited in the encoding process by differentially encoding the frequency and amplitude of signal segments following the first signal segment. This means that instead of the frequency and the amplitude of the signal segment, only the difference between the frequency of the signal component in the present signal segment and in the previous signal component are transmitted. The same can be done with the amplitudes of two subsequent segments.

In order to do so, the encoder comprises track determining means for determining which signal components are linked. In the transmission system according to the above mentioned US patent, the frequency difference between signal components in the present frame and in the previous frame are used to determine which frequency components are linked and which are not. However, experiments have shown that this does not always results in an optimum quality of the reconstructed audio signal.

An object of the present invention is to provide advantageous audio coding. To this end, the invention provides an audio encoder, a transmitter, a coding method, a tangible medium carrying a computer program and a signal carrying a computer program as defined in the independent claims. Advantageous embodiments are defined in the dependent claims.

According to a first aspect of the invention, the audio encoder according to the preamble of claim 1 is characterized in that the tracking means comprises selection means for selecting linked signal components resulting in a minimum error measure between a synthetic audio signal determined on basis of candidate linked signal components and said input audio signal.

By trying a plurality of candidate linked signal components and selecting that set of linked signal components resulting in a minimum error measure, an improved quality of the reconstructed audio signal is obtained. The error measure can be e.g. the mean squared error or a perceptually weighted error measure. It is observed that it is always necessary to actually generate the synthetic speech signal, but that it is be possible to use analytical methods to determine the optimum parameters of the signal components from the expression of the error signal.

An embodiment of the invention is characterized in that the encoder comprises synthesizing means for deriving the synthetic signal on basis of at least one parameter of said candidate linked signal components in two subsequent signal segments.

By deriving the synthetic signal on basis of at least one parameter (frequency, amplitude) of two subsequent signal segments, the change of said parameters in the synthetic signal is more smooth, which corresponds better to the properties of the input audio signal.

A further embodiment of the invention is characterized in that the synthesizing means are arranged for deriving interpolated signal component parameters from signal component parameters corresponding to at least two subsequent signal segments and in that the synthesizing means are arranged for deriving the synthetic signal on basis of the interpolated signal component parameters.

By using interpolated signal component parameters from signal component parameters of two (or more) subsequent signal segments is a naturally sounding synthetic audio signal is obtained.

A still further embodiment of the invention is characterized in that the tracking means comprise pre-selection means for selecting a limited number of candidate linked signal components from all possible linked signal components.

By performing a pre-selection before the actual selection of the linked signal components, it is obtained that the required computational resources are substantially reduced.

A still further embodiment of the invention is characterized in that the pre-selection means are arranged to select as candidate linked signal components signal components having a frequency difference smaller than a predetermined value.

A suitable way of pre-selecting the candidate signal components is the selection of candidate signal components having only a relative small frequency difference. The frequency difference to be allowed is a trade-off between quality and computational complexity. It is however observed that allowing frequency differences above a given value the quality of the reconstructed speech signal hardly improves.

An alternative embodiment of the present invention is characterized in that the tracking means are arranged for extending tracks on the basis of the parameters of linked signal components already determined.

By extending the current track by means of an extrapolation, the complexity of the track determining means is substantially reduced, because the process of trying a large number of candidate signal components can be dispensed with.

The present invention will now be explained with reference to the drawings.

Fig. 1 shows a transmission system in which the present invention can be applied.

Fig. 2 shows a first embodiment of an encoder according to the invention for use in the transmission system according to Fig. 1.

Fig. 3 shows a second embodiment of an encoder according to the invention for use in the transmission system according to Fig. 1.

Fig. 4 shows a possible implementation of the tracking block 44 to be used in the encoder according to Fig. 3.

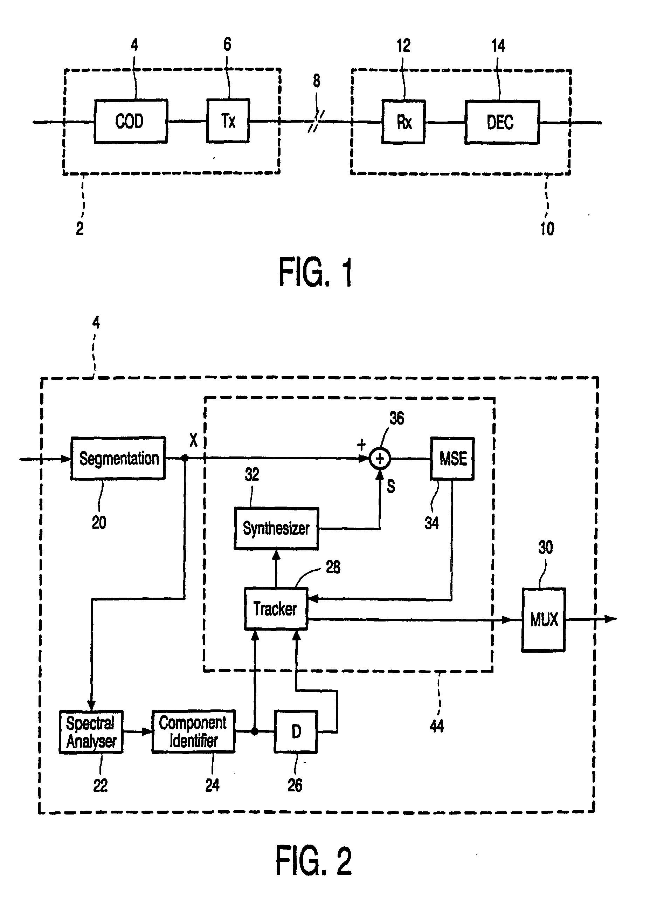

In the transmission system according to Fig. 1, the audio signal to be transmitted is applied to an encoder 4 in a transmitter 2. The encoder 4 encodes the input signal as tracks of linked signal components. Said tracks can be represented by a start frequency, a start amplitude and a start phase for the first signal segment, followed by frequency and amplitude differences for the next segments of the track.

A signal representing said tracks is applied to the transmit means 6. The operation of the transmit means 6 can include channel coding, interleaving and modulation. The output of the transmitter 2 is applied to the transmission medium (or recording medium) 8 for transmission to the receiver 10. In the receiver 10 the signal from the received signal is applied to the receive means 12. The operations of the receive means 10 can include demodulation, de-interleaving and channel decoding. The output of the receive means 12 is connected to an input of a decoder 14 which is arranged for decoding the encoded audio signal. The operation principle of the decoder 14 is described in the above mentioned US patent.

In the encoder 4 according to Fig. 2, the input signal is applied to segmenting means 20 that divide the input signal in signal segments having fixed or signal dependent segment lengths ranging from 5 - 50 ms. The segments can be partly overlapping, but it is also possible that the segments have no overlap. The segmentation means 20 select a part of the signal comprising data that is input to the spectral analyzer 22 and data that is input for the closed loop tracking block 44. The appropriate data in either unit is obtained by windowing in the respective units. The segmentation means 20 also generates time markers $T_k$, marking the instance in the current signal segment corresponding to the instantaneous tracking parameters that are to be calculated on basis of the current signal segment, $T_{k-1}$ corresponds to the instance in the current segment at which the instantaneous tracking parameters have been calculated in the previous iteration. Parameters obtained after closed loop tracking in the $k^{th}$ segment are represented using the subscript k e.g. $A_k$. The output of the segmentation means 20 is connected to an input of a spectral analyzer 22 and to a first input of a subtractor 36.

The spectral analyzer 22 performs a coarse determination of the frequency spectrum of its input signal. This frequency spectrum forms the basis for determining the linked signal components. The coarse search performed by the spectral analyzer 22 can be based on a moderate size FFT followed by selecting the major peaks in the amplitude spectrum. The output signal of the spectral analyzer 22 is passed to component identification means 24, which perform a fine search for the parameters of the signal components. This fine search can be done in the neighborhood of the major peaks determined by the spectral analyzer 22 to obtain more accurate estimates of the parameters (amplitude, frequency and phase). Starting values for the amplitude and the frequency for the different signal components can be determined from the amplitude and the frequency of the corresponding peaks in the amplitude spectrum.

The output signal of the component identification means 24 is passed to a first input of the tracking means 28 and to a delay element 26 which has a delay of one frame period. The output of the delay element 26 is connected to a second input of the tracking means 28. The tracking means 28 starts with determining a limited number of candidate linked components. The selection of the limited number of candidate linked components can be based on the amplitude and frequency difference. For each signal component of the previous frame, all components in the current frame having a frequency and amplitude difference smaller than predetermined threshold values are added to a table of candidate linked components. Threshold values may be set on the basis of available amplitude and frequency data, and additionally on the update rate, i.e. $1/(T_k - T_{k-1})$. Consequently, a table comprising a plurality of sets each consisting of two linked signal components is obtained. An example of such a table is given below.

|  | $f_{1,k}$=149 | $f_{2,k}$=220 | $f_{3,k}$=289 | $f_{4,k}$=361 | $f_{5,k}$=428 | $f_{6,k}$=500 | $f_{7,k}$=579 |
|---|---|---|---|---|---|---|---|
| $f_{1,k-1}$=131 | x | x |  |  |  |  |  |
| $f_{2,k-1}$=255 | x | x | x | x |  |  |  |
| $f_{3,k-1}$=380 |  |  | x | x | x |  |  |
| $f_{4,k-1}$=495 |  |  |  |  | x | x | X |
| $f_{5,k-1}$=594 |  |  |  |  |  | x | X |

The amplitudes and frequencies of the signal components in each set are applied to a synthesizer 32 for deriving a synthetic audio signal from the linked signal components.

The synthetic audio signal $c_{i,j}$, linking the ith component of Frame k-1 with the jth component of Frame k, can be calculated by using linear interpolation of the frequencies and amplitudes between the boundaries of the frames. The synthetic signal corresponding to one track i,j can be calculated according to:

$$c_{i,j} = M[n] \cdot \cos\left(\frac{\beta}{2}(n - T_{k-1})^2 + \theta_{i,k-1}(n - T_{k-1}) + \varphi\right); T_{k-1} \leq n \leq T_k \qquad (1)$$

In **(1)** M[n] is given by:

$$M[n] = \frac{T_k - n}{T_k - T_{k-1}} A_{i,k-1} + \frac{n - T_{k-1}}{T_k - T_{k-1}} A_{j,k} \; ; T_{k-1} \leq n \leq T_k \qquad (2)$$

And $\beta$ is equal to:

$$\beta = \frac{\theta_{j,k-1} - \theta_{i,k}}{T_k - T_{k-1}} \qquad (3)$$

where $\theta = 2\pi f/fs$. The phase $\varphi$ can be set to $\phi_{i,k-1}$, which is the phase at the end of the previous frame. The phase $\varphi$ can also be derived from a phase value $\phi_{i,k}$ resulting in a minimum error measure.

An alternative to the synthesizer sketched above can for instance be the well-known overlap add synthesizer.

The output of the synthesizer 32 is connected to a second input of the subtractor 36. The subtractor 36 determines the difference between the output signal of the segmentation means 20 and the output signal of the synthesizer 32. The output of the subtractor 36 is connected to an input of a MSE unit 34. This MSE unit 34 determines a mean square value of the output of the subtractor 36 over one frame. Optionally, the MSE unit 34 comprises a weighting filter for perceptually weighting the previously determined mean square value. The output of the MSE unit 34 is connected to a third input of the tracking means 28.

The tracking means 28 use the output signal of the MSE unit 34 to determine which combination of sets of linked signal components results in the smallest output signal of the MSE unit 34. This can be done by performing a full synthesis for all possible combinations of links, but it is also possible to perform a sub-optimal search which requires substantially less computational resources. In this sub-optimal search the synthesis is performed for one component only, and the mean squared error between the input signal and said synthetic component is calculated. This is done for all possible tracks, and a so-called error matrix is constructed. In this matrix all possible tracks are identified together with their corresponding error. Below an example of such a matrix is displayed.

| | $f_{1,k}$=149 | $f_{2,k}$=220 | $f_{3,k}$=289 | $f_{4,k}$=361 | $f_{5,k}$=428 | $f_{6,k}$=500 | $f_{7,k}$=579 |
|---|---|---|---|---|---|---|---|
| $f_{1,k-1}$=131 | 52876 | 62929 | | | | | |
| $f_{2,k-1}$=255 | 76778 | 90541 | 55049 | 69752 | | | |
| $f_{3,k-1}$=380 | | | 80849 | 89816 | 63016 | | |
| $f_{4,k-1}$=495 | | | | | 70948 | 74605 | 69535 |
| $f_{5,k-1}$=594 | | | | | | 73881 | 70260 |

In the matrix only the errors are included for the components corresponding to the preselected links.

Although in the example shown above all links are shown, it is possible to leave out the links which cause an increase of the error instead of a decrease. When the possible links are resolved, it must be the case that a signal component in the current frame has only one single corresponding component in the previous frame, and that a signal component in the previous frame has only one single corresponding component in the current frame. In the above matrix this means that rows and columns may not have multiple entries.

One possible sub-optimal way of finding the final is to first select the element in each column having the smallest error, and subsequently selecting the element in each row having the smallest error. After selecting the single elements in the columns, the matrix changes into:

| | $f_{1,k}$=149 | $f_{2,k}$=220 | $f_{3,k}$=289 | $f_{4,k}$=361 | $f_{5,k}$=428 | $f_{6,k}$=500 | $f_{7,k}$=579 |
|---|---|---|---|---|---|---|---|
| $f_{1,k-1}$=131 | 52876 | 62929 | | | | | |
| $f_{2,k-1}$=255 | | | 55049 | 69752 | | | |
| $f_{3,k-1}$=380 | | | | | 63016 | | |
| $f_{4,k-1}$=495 | | | | | | | 69535 |
| $f_{5,k-1}$=594 | | | | | | 73881 | |

After subsequently selecting the single elements in the columns, the following final link matrix is obtained.

| | $f_{1,k}$=149 | $f_{2,k}$=220 | $f_{3,k}$=289 | $f_{4,k}$=361 | $f_{5,k}$=428 | $f_{6,k}$=500 | $f_{7,k}$=579 |
|---|---|---|---|---|---|---|---|
| $f_{1,k-1}$=131 | 52876 | | | | | | |
| $f_{2,k-1}$=255 | | | 55049 | | | | |
| $f_{3,k-1}$=380 | | | | | 63016 | | |
| $f_{4,k-1}$=495 | | | | | | | 69535 |
| $f_{5,k-1}$=594 | | | | | | 73881 | |

It is also possible to start with selecting the element in each row having the smallest error and subsequently selecting the element in each column having the smallest error. It is also possible that both possibilities are tried, and the results of the selection method leading to the smallest mean squared error (= the sum of all matrix elements) are chosen.

At the end of the procedure the tracks to be continued are available. The signal components in the previous frames that are not linked are either the end of a track or isolated points. The components in the current frame that could not be linked are either a newly appearing track or an isolated point. The inclusion of the parameters of the isolated points in the signal to be transmitted can be based on subjective measures such as masking threshold or on objective measures such as reduction in the error or a combination of both. Since inclusion of these isolated components also has an impact on the bitrate, the bit budget can also be considered in the process.

After the selection means have selected the linked signal components and the isolated points to be transmitted, signals representing the tracks of linked components are applied to a multiplexer 30 which combines them into a multiplex signal which is suitable for transmission.

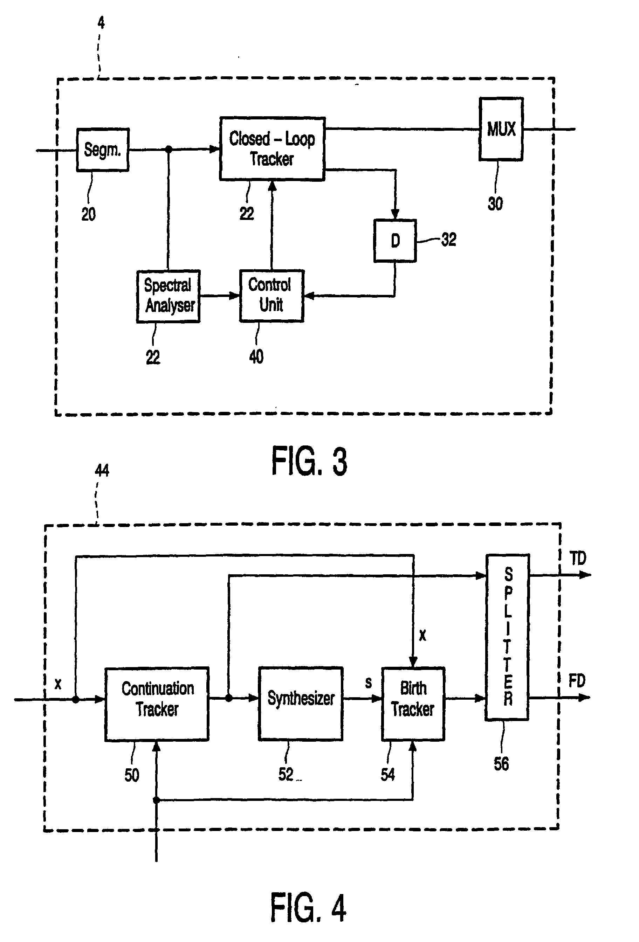

In the encoder 4 according to Fig. 3, the segmentation unit 20, the function of which has already been described, selects a part of the signal comprising data that is input to the spectral analyzer 22 and data that is input for the closed loop tracking block 44. The appropriate data in either unit is obtained by windowing in the respective units.

A memory unit 32 holds a description relevant information from the previous segment k-1. The control unit 40 uses the input signal received from the memory unit 32 and possibly the input from the spectral analyzer 22 to make an estimate of track continuation parameters. The continuation data comprises information about which tracks will be continued and the ones that will be discontinued. For each track that will be continued, at least one estimate of the frequency location, to which it will be continued is provided.

The output of the control unit 40 along with the current input segment serve as the inputs to the closed loop tracking block 44. The output of the closed loop tracking block 44 consists of track data (indicated using TD in Figure 3) of both the continuing tracks and the newly appearing tracks. The output FD of tracking block 44 in Figure 3 contains auxiliary information in addition to the track data TD. The auxiliary information contains information that is necessary to perform local synthesis and could contain additional information such as the reduction in error that was obtained.

The track data TD is fed to the multiplexer 30, which combines the information in to a multiplex signal which is suitable for transmission.

One of the tasks of the control unit 40 is to decide whether a track should be continued in the current segment. This decision is taken on the basis of the available track information thus far including the auxiliary information. The other task is to compute one or more initial estimates of the frequency at $T_k$ for each track that should be continued. This computation can be carried out for varying levels of sophistication, starting from zero[th] order extrapolation where only frequency information at $T_{k-1}$ is required, to higher-order prediction using frequency information at $T_i$ with i<k-1. In this computation, use can be made from the additional information available at the output of the spectral analyzer 22.

A possible implementation of the tracking block 44 is shown in Fig. 4. The outputs of the control unit 40 and the segmentation unit 20 are input to the continuation tracker 50. The continuation tracker implements a search procedure so as to deliver the optimum parameters corresponding to continuing tracks and the auxiliary information. Using this, a signal s can be synthesized by the synthesizer 52. The output of the synthesizer 52 along with the output of the segmentation unit 20 and possibly the output of the control unit 40 is used by the tracker of newly appearing components 54 to deliver the optimum parameters for the newly appearing tracks along with the auxiliary information. The outputs of the trackers 50 and 54 are used by the splitter 56 to deliver track data (TD) and feedback data (FD).

The continuation tracker 50 implements a search procedure to deliver an improved estimate of the frequency $\theta_m$ at time $T_k$, along with the optimum amplitude $A_m$ and phase $\varphi_m$ and auxiliary information. The search itself is based upon minimizing the weighted squared error, which can be expressed as:

$$E = \sum_n w_k(n) \cdot \left[x(n) - s(n)\right]^2 \qquad (4)$$

where $w_k$ is the weighting function in the kth segment, x[n] is the input segment, s[n] is the synthesized segment and n addresses the interval defined by the weighting function. The weighting function is generated on the basis of segment length and the markers $T_k$ - $T_{k-1}$. Let s(n) represent the synthesized signal according to:

$$s(n) = \sum_{m=1}^{v(T_{k-1})} a_m(n) \cos(\phi_m(n)) + b_m(n) \sin(\phi_m(n)) \qquad (5)$$

In (5) $\nu$ is the number of continuing tracks in the current frame and the coefficients $a_m(n)$, $b_m(n)$ and $\phi_m(n)$ in (7) are calculated according to:

$$a_m(n) = a_m(T_{k-1}) + \{a_m(T_k) - a_m(T_{k-1})\} \frac{n - T_{k-1}}{T_k - T_{k-1}} \qquad (6)$$

$$b_m(n) = b_m(T_k) \frac{n - T_{k-1}}{T_k - T_{k-1}} \qquad (7)$$

$$\theta_m(n) = \theta_m(T_{k-1}) + \{\theta_m(T_k) - \theta_m(T_{k-1})\} \frac{n - T_{k-1}}{T_k - T_{k-1}} \qquad (8)$$

$$\phi_m(n) = \phi_m(T_{k-1}) + \sum_{l=T_{k-1}}^{n-1} \theta(l) \qquad (9)$$

$$\phi_m(T_{k-1}) = \varphi_m(T_{k-1}) \qquad (10)$$

$$a_m(T_{k-1}) = A_m(T_{k-1}) \qquad (11)$$

Thus the minimization of (6) can be expressed as:

$$\min_{\theta_m(T_k), a_m(T_k), b_m(T_k)} E \qquad (12)$$

where the minimum is taken over all m according to $1 \leq m \leq \nu(T_{k-1})$. It is noted, however, that $a_m(T_k)$ and $b_m(T_k)$ appear linearly in s(n). This implies that their optimal values according to the given minimization criterion are the solution of a set of normal equations, thereby simplifying the search procedure and reducing the problem to minimization over $\theta_m(T_k)$.

By using (7) to (12), (4) can be rewritten as:

$$E = \sum_n w_k(n) \left[ x(n) - \sum_{m=1}^{\nu(T_{k-1})} a_m(T_{k-1}) \left( 1 - \frac{n - T_{k-1}}{T_k - T_{k-1}} \right) \cos(\phi_m(n)) \right.$$

$$\left. - \sum_{m=1}^{\nu(T_{k-1})} a_m(T_k) \left( \frac{n - T_{k-1}}{T_k - T_{k-1}} \right) \cos(\phi_m(n)) - \sum_{m=1}^{\nu(T_{k-1})} b_m(T_k) \left( \frac{n - T_{k-1}}{T_k - T_{k-1}} \right) \sin(\phi_m(n)) \right]^2 \qquad (13)$$

Each iteration of the search procedure is started by selecting values of $\theta_m(T_k)$ and calculating the optimum corresponding values of $a_m(T_k)$ and $b_m(T_k)$. In order to calculate the values of $a_m(T_k)$ and $b_m(T_k)$, the following substitutions are performed:

$$\tilde{x}(n) = x(n) - \sum_{m=1}^{v(T_{k-1})} a_m(T_{k-1}) \left(1 - \frac{n - T_{k-1}}{T_k - T_{k-1}}\right) \cos(\phi_m(n)) \tag{14}$$

$$p_{2m-1}(n) = \frac{n - T_{k-1}}{T_k - T_{k-1}} \cos(\phi_m(n)) \tag{15}$$

$$p_{2m}(n) = \frac{n - T_{k-1}}{T_k - T_{k-1}} \sin(\phi_m(n)) \tag{16}$$

$$c_{2m-1} = a_m(T_k) \tag{17}$$

$$c_{2m} = b_m(T_k) \tag{18}$$

Substituting **(15)** to **(19)** into **(14)** gives the following criterion to be minimized:

$$E = \sum_n w_k(n) \left[\tilde{x}(n) - \sum_{m=1}^{2v(T_{k-1})} c_m \cdot p_m(n)\right]^2 \tag{19}$$

The minimum of E is found by differentiating **(19)** with respect to each of the values $c_m$ and setting each derivative to zero. This leads to the following set of equations from which the constants $c_1, c_2, \cdots, c_{2v-1}, c_{2v}$ have to be determined.

$$\sum_n w_k(n)\tilde{x}(n) \cdot p_1(n) - \sum_n w_k(n) \cdot \sum_{m=1}^{2v(T_{k-1})} c_m \cdot p_m(n) \cdot p_1(n) = 0$$

$$\sum_n w_k(n)\tilde{x}(n) \cdot p_2(n) - \sum_n w_k(n) \cdot \sum_{m=1}^{2v(T_{k-1})} c_m \cdot p_m(n) \cdot p_2(n) = 0$$

$$\vdots \qquad\qquad \vdots \qquad\qquad \vdots \tag{20}$$

$$\sum_n w_k(n)\tilde{x}(n) \cdot p_{2v-1}(n) - \sum_n w_k(n) \cdot \sum_{m=1}^{2v(T_{k-1})} c_m \cdot p_m(n) \cdot p_{2v-1}(n) = 0$$

$$\sum_n w_k(n)\tilde{x}(n) \cdot p_{2v}(n) - \sum_n w_k(n) \cdot \sum_{m=1}^{2v(T_{k-1})} c_m \cdot p_m(n) \cdot p_{2v}(n) = 0$$

**(21)** can be cast in matrix notation according to $\vec{d} - A\vec{c} = \vec{0}$ with $\vec{d}$, A and $\vec{c}$ being equal to:

$$\vec{d} = \begin{pmatrix} \sum_n w(n)\,\tilde{x}(n)\cdot p_1(n) \\[6pt] \sum_{n_1} w(n)\,\tilde{x}(n)\cdot p_2(n) \\[6pt] \vdots \\[6pt] \sum_n w(n)\,\tilde{x}(n)\cdot p_{2v-1}(n) \\[6pt] \sum_n w(n)\,\tilde{x}(n)\cdot p_{2v}(n) \end{pmatrix} \qquad (21)$$

$$A =$$

$$\begin{pmatrix} \sum_n w_k(n)p_1(n)p_1(n) & \sum_n w_k(n)p_1(n)p_2(n) & \cdots & \sum_n w_k(n)p_1(n)p_{2v-1}(n) & \sum_n w_k(n)p_1(n)p_{2v}(n) \\[6pt] \sum_n w_k(n)p_2(n)p_1(n) & \sum_n w_k(n)p_2(n)p_2(n) & \cdots & \sum_n w_k(n)p_1(n)p_{2v-1}(n) & \sum_{n_1} w_k(n)p_1(n)p_{2v}(n) \\[6pt] \vdots & \vdots & \ddots & \vdots & \vdots \\[6pt] \sum_n w_k(n)p_{2v-1}(n)p_1(n) & \sum_n w_k(n)p_{2v-1}(n)p_2(n) & \cdots & \sum_n w_k(n)p_{2v-1}(n)p_{2v-1}(n) & \sum_n w_k(n)p_{2v-1}(n)p_{2v}(n) \\[6pt] \sum_n w_k(n)p_{2v}(n)p_1(n) & \sum_n w_k(n)p_{2v}(n)p_2(n) & \cdots & \sum_n w_k(n)p_{2v}(n)p_{2v-1}(n) & \sum_n w_k(n)p_{2v}(n)p_{2v}(n) \end{pmatrix}$$

$$(22)$$

$$\vec{c} = \begin{pmatrix} c_1 \\ c_2 \\ \vdots \\ c_{2v-1} \\ c_{2v} \end{pmatrix} \qquad (23)$$

The value of $\vec{c}$ can now be calculated according to:

$$\vec{c} = A^{-1}\cdot\vec{d} \qquad (24)$$

The optimization can be carried out over all tracks simultaneously or track by track. In the latter case, the optimization block decides on the ordering. Such a decision can for instance be made on the basis of the previously strength expressed in $A_m$. Conventional techniques to terminate the search procedure can be invoked. From $a_m$, $b_m$ and $\phi_m$ at Tk the values $A_m$ and

$\varphi_m$ at $T_k$ are calculated according to:

$$A_m = \sqrt{a_m{}^2 + b_m{}^2}$$
$$\varphi_m = \phi_m - \psi_m \qquad\qquad (25)$$

Where $\psi_m$ corresponds to the angle of the complex number $a_m + jb_m$.

The tracker of newly appearing components 54 is similar in functionality to the continuation tracker 50. The differences occur due to the fact that the tracker of newly appearing components 54 identifies newly appearing tracks rather than continuing tracks. Accordingly, the target signal against which the error is minimized may be derived from the segment synthesized thus far, s[n] together with the input segment x[n]. In its simplest form this may be derived by subtracting s from x. Additionally, the amplitude and the phase values $A_m$ and $\varphi_m$ at $T_k$ are set to 0. During a newly appearing track one has to make an assumption on the track of the frequency or the phase within the current segment. That the frequency is held constant during the birth is a suitable assumption. Thus, in its simplest form, the frequency value $\theta_m$ at $T_{k-1}$ may be set in accordance with a constant frequency track.

It is observed that the present invention can be implemented in dedicated hardware, in software running on a DSP or on a general purpose computer. The present invention can be embodied in a tangible medium such as a CD-ROM or DVD-ROM carrying a computer program for executing an encoding method according to the invention. The invention can also be embodied as a signal transmitted over a data network such as the Internet, or a signal transmitted by a broadcast service.

**Claims**

1. Audio encoder comprising:

   segmenting means for dividing an input audio signal into subsequent signal segments,
   signal component identification means for identifying signal components in the subsequent signal segments,
   track determining means for determining linked signal components present in the subsequent signal segments,

   **characterized in that** the track determining means comprises selection means for selecting linked signal components resulting in a minimum error measure between a synthetic audio signal determined on basis of candidate linked signal components and said input audio signal.

2. Audio encoder as claimed in claim 1, **characterized in that** the encoder comprises synthesizing means for deriving the synthetic signal on basis of at least one parameter of said candidate linked signal components in two subsequent signal segments.

3. Audio encoder as claimed in claim 2, **characterized in that** that the synthesizing means are arranged for deriving interpolated signal component parameters from signal component parameters corresponding to at least two subsequent signal segments and **in that** the synthesizing means are arranged for deriving the synthetic signal on basis of the interpolated signal component parameters.

4. Audio encoder as claimed in claim 1, 2 or 3, **characterized in that** the track determining means comprise pre-selection means for selecting a limited number of candidate linked signal components from all possible linked signal components.

5. Audio encoder as claimed in claim 4, **characterized in that** the pre-selection means are arranged to select as candidate linked signal components signal components having a frequency difference smaller than a predetermined value.

6. Audio encoder as claimed in any of the preceding claims, **characterized in that** the track determining means are arranged for extending tracks on basis of the parameters of linked signal components already determined.

7. Audio encoder as claimed in claim 6, **characterized in that** the track determining means are arranged for determining linked signal components on basis of a synthesis of one track.

8. Transmitter having an audio encoder as claimed in any of the preceding claims, the transmitter further comprising transmit means for transmitting a signal representing said linked signal components.

9. Coding method comprising:

   dividing an input audio signal into subsequent signal segments,
   identifying signal components in the subsequent signal segments,
   determining linked signal components present in subsequent signal segments,

   **characterized in that** the method comprises selecting linked signal components resulting in a minimum error measure between a synthetic audio signal determined on basis of candidate linked signal components and said input audio signal.

10. Tangible medium comprising a computer program for performing the coding method according to claim 9.

11. Signal carrying a computer program for performing the coding method according to claim 9.


**Revendications**

1. Codeur audio, comprenant :

   des moyens de segmentation destinés à diviser un signal audio d'entrée en des segments de signal suivants,
   des moyens d'identification de composantes de signal destinés à identifier des composantes de signal dans les segments de signal suivants,
   des moyens de détermination de piste destinés à déterminer des composantes de signal liées présentes dans les segments de signal suivants,

   **caractérisé en ce que** les moyens de détermination de piste comprennent des moyens de sélection destinés à sélectionner des composantes de signal liées donnant une mesure d'erreur minimale entre un signal audio synthétique déterminé sur la base de composantes de signal liées candidates et ledit signal audio d'entrée.

2. Codeur audio suivant la revendication 1, **caractérisé en ce que** le codeur comprend des moyens de type synthétiseur destinés à dériver le signal synthétique sur la base d'au moins un paramètre desdites composantes de signal liées candidates dans deux segments de signal suivants.

3. Codeur audio suivant la revendication 2, **caractérisé en ce que** les moyens de type synthétiseur sont propres à dériver des paramètres de composantes de signal interpolés à partir des paramètres de composantes de signal correspondant à au moins deux segments de signal suivants, et **en ce que** les moyens de type synthétiseur sont propres à dériver le signal synthétique sur la base des paramètres de composantes de signal interpolés.

4. Codeur audio suivant les revendications 1, 2 ou 3, **caractérisé en ce que** les moyens de détermination de piste comprennent des moyens de présélection destinés à sélectionner un nombre limité de composantes de signal liées candidates parmi toutes les composantes de signal liées candidates possibles.

5. Codeur audio suivant la revendication 4, **caractérisé en ce que** les moyens de présélection sont propres à sélectionner, comme composantes de signal liées candidates, des composantes de signal présentant une différence de fréquence inférieure à une valeur prédéterminée.

6. Codeur audio suivant l'une quelconque des revendications précédentes, **caractérisé en ce que** les moyens de détermination de piste sont propres à étendre des pistes sur la base des paramètres de composantes de signal liées déjà déterminés.

7. Codeur audio suivant la revendication 6, **caractérisé en ce que** les moyens de détermination de piste sont propres à déterminer des composantes de signal liées sur la base d'une synthèse d'une piste.

8. Emetteur comprenant un codeur audio suivant l'une quelconque des revendications précédentes, l'émetteur comprenant en outre des moyens de transmission destinés à transmettre un signal représentant lesdites composantes de signal liées.

9. Procédé de codage comprenant :

la division d'un signal audio d'entrée en segments de signal suivants;
l'identification de composantes de signal dans les segments de signal suivants, et
la détermination de composantes de signal liées présentes dans des segments de signal suivants,

**caractérisé en ce que** le procédé comprend la sélection de composantes de signal liées donnant une mesure d'erreur minimale entre un signal audio synthétique déterminé sur la base de composantes de signal liées candidates et ledit signal audio d'entrée.

10. Support réel, comprenant un programme informatique destiné à exécuter le procédé de codage suivant la revendication 9.

11. Signal portant un programme informatique destiné à exécuter le procédé de codage suivant la revendication 9.

**Patentansprüche**

1. Audiocodierer, der die nachfolgenden Elemente aufweist:

- Segmentierungsmittel zum Aufteilen eines Eingangs-Audiosignals in aufeinander folgende Signalsegmente,
- Signalanteil-Identifikationsmittel zum Identifizieren von Signalanteilen in den aufeinander folgenden Signalsegmenten,
- Spurbestimmungsmittel zum Bestimmen gekoppelter Signalanteile in den aufeinander folgenden Signalsegmenten, **dadurch gekennzeichnet, dass** die Spurmittel Selektionsmittel aufweisen zum Selektieren gekoppelter Signalanteile, was zu einer minimalen Fehlergröße zwischen einem synthetischen Audiosignal, bestimmt auf Basis von Kandidat-gekoppelten Anteilen, und dem genannten Eingangs-Audiosignal führt.

2. Audiocodierer nach Anspruch 1, **dadurch gekennzeichnet, dass** der Codierer Synthetisierungsmittel aufweist zum Herleiten des synthetischen Signals auf Basis wenigstens eines Parameters der genannten Kandidat-gekoppelten Signalanteile in zwei aufeinander folgenden Signalsegmenten.

3. Audiocodierer nach Anspruch 2, **dadurch gekennzeichnet, dass** die Synthetisierungsmittel vorgesehen sind zum Herleiten interpolierten Signalanteilparameter aus Signalanteilparametern entsprechend wenigstens zwei aufeinanderfolgenden Signalsegmenten und dass die Synthetisierungsmittel vorgesehen sind zum Herleiten des synthetischen Signals auf Basis der interpolierten Signalanteilparameter.

4. Audiocodierer nach Anspruch 1, 2 oder 3, **dadurch gekennzeichnet, dass** die Spurbestimmungsmittel Vorselektionsmittel aufweisen zum Selektieren einer begrenzten Anzahl Kandidat-gekoppelter Signalanteile aus allen möglichen gekoppelten Signalanteilen.

5. Audiocodierer nach Anspruch 4, **dadurch gekennzeichnet, dass** die Vorselektionsmittel vorgesehen sind zum Selektieren als Kandidat-gekoppelte Signalanteile Signalanteile mit einer Frequenzdifferenz, die kleiner ist als ein vorbestimmter Wert.

6. Audiocodierer nach einem der vorstehenden Ansprüche, **dadurch gekennzeichnet, dass** die Spurbestimmungsmittel vorgesehen sind zum Ausdehnen von Spuren auf Basis der Parameter bereist bestimmter gekoppelter Signalanteile.

7. Audiocodierer nach Anspruch 6, **dadurch gekennzeichnet, dass** die Spurbestimmungsmittel vorgesehen sind zum Bestimmen gekoppelter Signalanteile auf Basis einer Synthese einer Spur.

8. Sender mit einem Audiocodierer nach einem der vorstehenden Ansprüche, wobei dieser Sender weiterhin Übertragungsmittel aufweist zum Übertragen eines Signals, das die genannten gekoppelten Signalanteile darstellt.

9. Codierungsverfahren, das die nachfolgenden Verfahrensschritte umfasst:

- das Aufteilen eines Eingangs-Audiosignals in aufeinander folgende Signalsegmente,
- das Identifizieren von Signalanteilen in den aufeinander folgenden Signalsegmenten,
- das Bestimmen gekoppelter Signalanteile, die in aufeinander folgenden Signalsegmenten vorhanden sind, **dadurch gekennzeichnet, dass** das Verfahren weiterhin umfasst: das Selektieren gekoppelter Signalanteile, was zu einer minimalen Fehlergröße zwischen einem synthetischen Audiosignal, bestimmt auf Basis von Kandidat-gekoppelten Signalanteilen, und dem genannten Eingangs-Audiosignal führt.

10. Tastbares Medium mit einem Computerprogramm zum Durchführen des Codierungsverfahrens nach Anspruch 9.

11. Signal, das ein Computerprogramm trägt zum Durchführen des Codierungsverfahrens nach Anspruch 9.

FIG. 1

FIG. 2

FIG. 3

FIG. 4